# EUROPÄISCHE PATENTSCHRIFT

(11) **EP 1 199 640 B1**
(45) Veröffentlichungstag und Bekanntmachung des Hinweises auf die Patenterteilung: **20.02.2008**
(21) Anmeldenummer: 01122524.0
(22) Anmeldetag: 24.09.2001
(51) Int. Cl.: G06F 13/12, G06F 11/22

(54) **Verfahren zum Übertragen von Daten zwischen einer ersten und einer zweiten Recheneinheit**
Data transfer method between two computing units
Méthode de transfert de données entre deux unités d'ordinateur

(30) Priorität: 18.10.2000 DE 10051535
(43) Veröffentlichungstag der Anmeldung: 24.04.2002
(73) Patentinhaber: Heidelberger Druckmaschinen Aktiengesellschaft, 69115 Heidelberg (DE)
(72) Erfinder: König, Edelbert, 76709 Kronau (DE)
(74) Vertreter: Fey, Hans-Jürgen

(56) Entgegenhaltungen:
- EP-A- 0 613 274
- EP-A- 0 798 904
- DE-A1- 19 739 297
- US-A- 5 226 074
- PATENT ABSTRACTS OF JAPAN Bd. 1999, Nr. 01, 29. Januar 1999 (1999-01-29) & JP 10 271126 A (HITACHI LTD; HITACHI SOFTWARE ENG CO LTD), 9. Oktober 1998 (1998-10-09)

## Beschreibung

Die Erfindung betrifft ein Verfahren zum Übertragen von Daten zwischen zwei Recheneinheiten gemäß dem Oberbegriff des Patentanspruchs 1.

Zum Übertragen von Daten zwischen zwei Recheneinheiten sind eine Vielzahl von Verfahren bekannt. Beispielsweise werden Daten über das Internet zwischen zwei Recheneinheiten ausgetauscht. Weiterhin ist es bekannt, Daten über eine direkte Datenverbindung zwischen zwei Modems auszutauschen. Bei der Verwendung von Modems über eine direkte Datenverbindung oder bei einem Datenaustausch über das Internet ist es erforderlich, dass beide Recheneinheiten die Daten nach einem vorgegebenen Kommunikationsprotokoll abgeben und empfangen. Dadurch ist es erforderlich, dass eine Recheneinheit vor dem Aufbau der Datenverbindung weiß, welches Kommunikationsprotokoll die zweite Recheneinheit verwendet. Damit ist das bekannte Verfahren jedoch wenig flexibel.

Aus dem Patent US 5,226,074 ist die Wartung und Steuerung eines Faxgerätes durch ein anderes Faxgerät eines Wartungsbetriebs über eine Telefonverbindung bekannt. Zwischen den Faxgeräten wird zur Wartung eine gewöhnliche Telefonverbindung aufgebaut, um vom Wartungsbetrieb aus auf ein entfernt gelegenes Faxgerät zugreifen zu können. Dazu wird von dem Wartungsbetrieb aus die Nummer eines zu wartenden Faxgeräts angewählt und entsprechende Wartungsdiagnosevorgänge auf dem zu wartenden Faxgerät ausgeführt. Die Ergebnisse der durchgeführten Wartungsmaßnahmen werden dann ausgedruckt. Da die beteiligten Faxgeräte jeweils über die normale Telefonverbindung miteinander kommunizieren, werden die üblichen Standard-Faxprotokolle verwendet, die keine Abstimmung untereinander erfordern.

Die Aufgabe der Erfindung besteht darin, ein flexibleres Verfahren zum Übertragen von Daten bereitzustellen. Die Aufgabe der Erfindung wird durch die Merkmale des Anspruchs 1 gelöst.

Ein wesentlicher Vorteil der Erfindung besteht darin, dass vor dem Aufbau einer Datenverbindung die zwei Recheneinheiten eine Verbindung zueinander aufbauen und eine Einigung auf eines von mehreren möglichen Kommunikationsprotokollen erfolgt. Diese Vorgehensweise bietet den Vorteil, dass nicht von vornherein feststehen muss, über welches Kommunikationsprotokoll die Daten ausgetauscht werden. Auf diese Weise ist ein flexiblerer Datenaustausch zwischen beliebigen Recheneinheiten möglich.

Weitere vorteilhafte Ausführungsformen der Erfindung sind in den abhängigen Ansprüchen angegeben. Vorzugsweise wird eine vorgegebene Anzahl von Diagnoseprogrammen zur Überprüfung einer Druckmaschine bereitgestellt, die zur Überprüfung der Druckmaschine abgearbeitet werden können. Damit hat die erste Recheneinheit die Möglichkeit, ein für die benötigten Informationen optimales Diagnoseprogramm auszuwählen.

In einer bevorzugten Ausführungsform wird abhängig von dem ausgewählten Diagnoseprogramm ein vorgegebenes Kommunikationsprotokoll festgelegt, über das Daten zwischen der ersten und zweiten Recheneinheit übertragen werden. Diese Vorgehensweise bietet den Vorteil, dass das Kommunikationsprotokoll für das gewählte Diagnoseprogramm festgelegt ist und damit beispielsweise für die nach dem Diagnoseprogramm zu übertragenen Daten ein optimales Kommunikationsprotokoll ausgewählt wird.

In einer Weiterbildung der Erfindung wird zur Ausgabe der Daten eine vorgegebene Anzahl von Datenports festgelegt, über die die Daten parallel ausgegeben werden. Die parallel ausgegebenen Daten werden anschließend seriell übertragen. Zur eindeutigen Erkennung der Daten ist es erforderlich, dass die zweite Recheneinheit die Anzahl der Datenports kennt. Durch die Verwendung von Datenports können die Daten schnell parallel ausgegeben werden und anschließend seriell übertragen werden.

Eine Weiterbildung der Erfindung besteht darin, dass in dem Auswahlprogramm die Art der Steuerung ausgewählt wird, mit der die Druckmaschine von der Recheneinheit angesteuert wird. Auf diese Weise ist eine präzise Bestimmung der für eine Diagnose zu verwendenden Diagnoseprogramme möglich.

Die Erfindung wird im Folgenden anhand der Figuren näher erläutert. Es zeigen
- Fig. 1: eine schematische Anordnung einer ersten Recheneinheit, die über eine Datenverbindung mit einer zweiten Recheneinheit verbunden ist, wobei die zweite Recheneinheit an einer Druckmaschine angeschlossen ist,
- Fig. 2: in einer schematischen Darstellung einen Programmaufbau, mit dem Daten zwischen zwei Recheneinheiten ausgetauscht werden,
- Fig. 3: ein Verfahren zum Festlegen eines Verfahrens zum Austauschen von Daten und
- Fig. 4: ein Verfahren zum Austauschen von Daten.

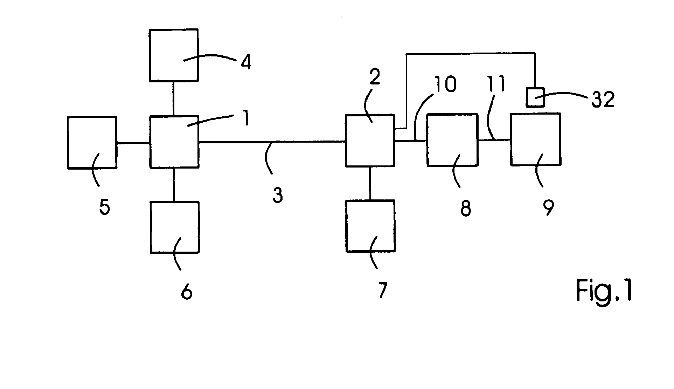

Fig. 1 zeigt eine erste Recheneinheit 1, die eine Eingabeeinheit 4, eine Anzeigeeinheit 5 und einen ersten Speicher 6 aufweist. Die erste Recheneinheit 1 ist über eine Datenverbindung 3 mit einer zweiten Recheneinheit 2 verbunden. Die zweite Recheneinheit 2 steht mit einem zweiten Speicher 7 und über Datenleitungen 10 mit einer Steuereinheit 8 in Verbindung. Die Steuereinheit 8 ist über eine Steuerleitung 11 an eine Druckmaschine 9 angeschlossen. Die zweite Recheneinheit 2 und die Steuereinheit 8 steuern nach vorgegebenen Verfahren und Daten, die im zweiten Speicher 7 abgelegt sind, die Druckmaschine 9. Die Druckmaschine 9 stellt beispielsweise eine Bogendruckmaschine dar. Die zweite Recheneinheit 2 ist an einen Sensor 32 angeschlossen, der an der Druckmaschine 9 angeordnet ist und Betriebsparameter der Druckmaschine 9 erfasst.

Die Datenverbindung 3 ist vorzugsweise in Form einer Punkt-zu-Punkt-Verbindung aufgebaut, bei der direkt über eine Telefonleitung eine Verbindung zwischen der ersten und der zweiten Recheneinheit 1, 2 aufgebaut ist. Die direkte Datenverbindung bietet den Vorteil, dass die Daten relativ sicher zwischen der ersten und der zweiten Recheneinheit übertragen werden.

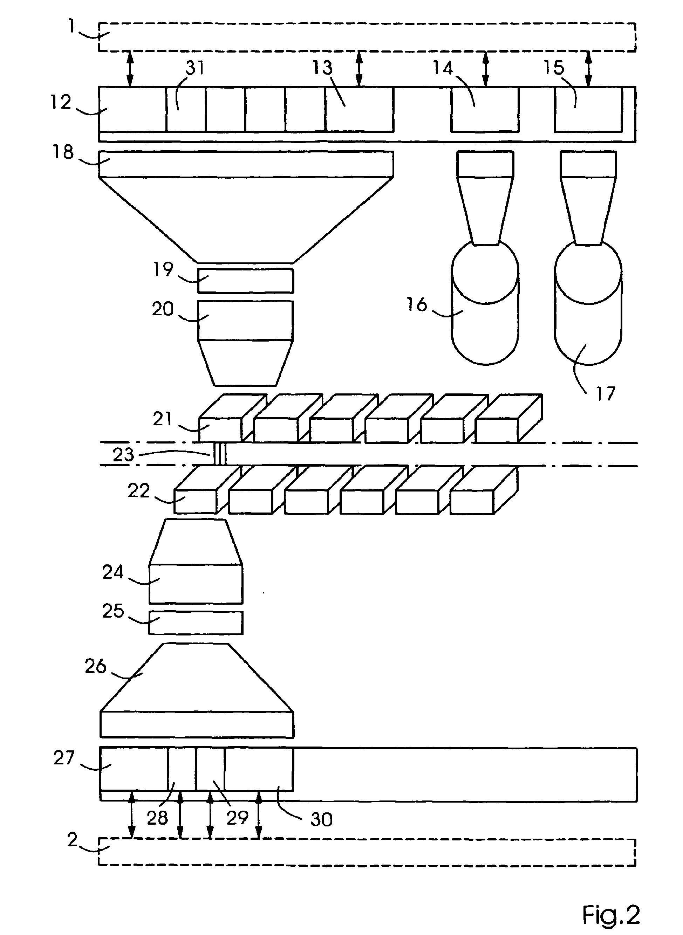

Fig. 2 zeigt schematisch ein Zusammenwirken verschiedener Softwareprogramme und Hardwarekomponenten. Im oberen Bereich ist die erste Recheneinheit 1 dargestellt, die sich beispielsweise in Heidelberg befindet. Die erste Recheneinheit 1 steht mit einem ersten Datenport 12 und einem zweiten Datenport 31 in Verbindung. Der erste und der zweite Datenport 12,31 sind vorzugsweise in Form von Software realisiert, wobei der erste und zweite Datenport 12,31 als Portnummern bei der Datenübertragung ausgebildet sind und jedes Datenpaket, das übertragen wird, eine Portnummer in einem Datenkopf aufweist.

Somit sind die Datenpakete vorgegebenen Datenports zuzuordnen. Auf diese Weise kann genau festgelegt werden, dass ein Datum vom ersten oder zweiten Datenport stammt.

Weiterhin weist die erste Recheneinheit 1 ein Konfigurationsprogramm 13, ein Kundenprogramm 14 und ein Applikationsprogramm 15 auf. Über das Konfigurationsprogramm 13 steht die erste Recheneinheit 1 mit einer ersten Datenbank 16 in Verbindung, in der die für die Konfiguration benötigten Parameter abgespeichert sind. Die erste Recheneinheit 1 steht weiterhin über das Applikationsprogramm 15 mit einer zweiten Datenbank 17 in Verbindung, in der die im Applikationsprogramm festgelegten Parameter abgespeichert sind. Die erste und die zweite Datenbank 16, 17 sind im ersten Speicher 6 abgelegt.

Der erste Datenport 12 ist als TCP/IP-Port ausgebildet und steht mit einer Portsoftware 18 in Verbindung, die die Daten, die von oder zu dem ersten Datenport 12 geleitet werden, einem Serialisationsprogramm 19 zugeführt werden. Das Serialisationsprogramm 19 steht mit einer Kanalverwaltung 20 in Verbindung.

Je nach Einstellung ist die Kanalverwaltung 20 mit einer der möglichen Schnittstellen 21 verbunden. Beispielsweise sind als Schnittstelle 21 eine analoge Schnittstelle, eine ISDN-Schnittstelle, eine Ethernet-Schnittstelle, eine COM-Schnitt-stelle oder eine USB-Schnittstelle vorgesehen.

Die Portsoftware 18 und das Serialisationsprogramm 19 setzen die parallel über die Datenports 12, 31 zugeführten Daten in einen seriellen Datenstrom um, bei dem die Daten eines Datenports in Form von Datenpaketen übertragen werden. Die Kanalverwaltung 20 wandelt die seriellen Daten, die vom Serialisationsprogramm 19 zur Verfügung gestellt werden, in ein Datenprotokoll um, das der gewählten Schnittstelle 21 entspricht.

Zwischen der Schnittstelle 21 und einer zweiten Schnittstelle 22 ist eine Wählverbindung 23 vorgesehen.

Die zweite Schnittstelle 22 steht mit einer zweiten Kanalverwaltung 24 in Verbindung, die wiederum mit einem zweiten Serialisationsprogramm 25 verbunden ist. Das zweite Serialisationsprogramm 25 ist an eine zweite Portsoftware 26 angeschlossen, die an einem dritten, vierten und fünften Datenport 27, 28, 29 angeschlossen ist. Weiterhin steht ein zweites Konfigurationsprogramm 30 mit der zweiten Portsoftware 26 in Verbindung. Der dritte, vierte und fünfte Datenport und das zweite Konfigurationsprogramm 30 stehen mit der zweiten Recheneinheit 2 in Verbindung.

Über das Kundenprogramm 14 können über eine entsprechende Eingabe über die Eingabe 4 verschiedene Kunden bzw. deren Druckmaschinen eingerichtet werden. Die Eingaben werden in der ersten Datenbank 16 abgelegt.

Für den jeweiligen Kunden bzw. die entsprechende Druckmaschine können z. B. die nachfolgenden Parameter eingestellt werden:
Maschinennummer; Name des Kunden; Land, in dem die Druckmaschine betrieben wird, wobei abhängig von dem Land die Ländervorwahl für eine Telefonverbindung aus einer entsprechenden Datenbank gewählt wird; die Telefonnummer eines Modems, mit dem eine Telefonverbindung zu der zweiten Recheneinheit aufgebaut werden kann; die TCP/IP-Adresse, unter der die zweite Recheneinheit erreichbar ist; eine Zuordnung der in der Druckmaschine verwendeten Steuerung und gegebenenfalls den Steckplatz der Steuerung auf einer Rechner-Grundplatine unter Angabe des Druckmaschinentyps.

Weiterhin können über das Kundenprogramm 14 der Kunde bzw. die entsprechende Druckmaschine ausgewählt werden. Nach der Auswahl kann die eigentliche Verbindung mit einem Login eingeleitet werden. Mit einem Logout bzw. Exit kann die Verbindung unterbrochen bzw. die Anwendung geschlossen werden. Beispielsweise können folgende weitere Elemente eingestellt oder ausgewählt werden: Eine Kundenliste, die für jeden Kunden und/oder jede Druckmaschine wichtige Informationen enthält; die Art der Verbindung, mit der eine Datenverbindung mit dem entsprechenden Kunden bzw. der entsprechenden Druckmaschine aufgebaut wird; die landesspezifische Vorwahl für das Land, in dem die Druckmaschine steht; eine Zuordnung einer Steuerung zu der Druckmaschine.

Weiterhin kann über das Applikationsprogramm 15 eine Festlegung oder Auswahl verschiedener Applikationen eingerichtet werden, die nach dem Verbindungsaufbau auf der Anzeige 5 gezeigt werden. Beispielsweise wird als Applikationssoftware Telnet eingesetzt, das einen Zugriff auf die zweite Recheneinheit 2 in Form einer Terminalsitzung ermöglicht. Dabei wird zwischen der ersten und zweiten Recheneinheit 1,2 eine bidirektionale, transparente, zeichenorientierte Verbindung aufgebaut. Die Kommunikation zwischen der ersten und der zweiten Recheneinheit 1,2 erfolgt auf der Basis eines Network Virtual Terminal (NVT).

Die Eingaben, die während des Applikationsprogramms festgelegt werden, werden in der zweiten Datenbank 17 abgelegt. In der Regel handelt es sich hier um Applikationen, mit denen eine Visualisierung der Betriebszustände der Druckmaschine möglich ist. Damit können die Betriebsparameter der Druckmaschine, die online abgefragt werden, auf der Anzeige 5 der ersten Recheneinheit 1 dargestellt werden. Für die gewünschte Applikation können beispielsweise folgende Parameter eingestellt werden: Zuordnung zur entsprechenden Druckmaschinen-Steuerung, etwa der von der an Heidelberger Druckmaschinen angebotenen Steuerungen CP 2000, CPTronic/RGP2 oder CPTronic/RGP3, eine Auswahl der Übergabeparameter bei der Durchführung von Diagnoseprogrammen, eine Anzeige der verwendeten Version des Diagnoseprogramms und die Anzeige eines Buttons, der den Verbindungsaufbau auf der Anzeige 5 automatisch anzeigt.

Über das Konfigurationsprogramm 13 wird beim Aufbau einer Datenverbindung zwischen der ersten und der zweiten Recheneinheit 1, 2 unter Zusammenspiel mit dem zweiten Konfigurationsprogramm 30 eine bestimmte Datenkonfiguration ausgewählt, nach der der Kommunikationskanal zwischen der ersten und der zweiten Recheneinheit 1, 2 aufgebaut wird.

Dabei können beispielsweise die Art der Verbindung nach folgenden Parametern eingestellt werden: CAPI-Treiber (ISDN-Anbindung über ISDN-Karte); COM (serielle Schnittstelle über COMn); Modem (analog - oder ISDN-Modem über COMn); TCP/IP (über TCP/IP-Adresse); Wahlverfahren (Ton oder Puls); direkte Wahl ohne Vorwahl; Vorwahl mit Null; COM-Port (verwendeter COM-Ausgang); Timeout, das angibt, innerhalb welcher Zeitspanne eine Datenverbindung abgebrochen wird, wenn keine Datenverbindung zustande kommt; Initstring (Initialisierungs-String für Modem); Server/Client-Einstellung, die angibt, in welchem Mode der ACM betrieben werden soll; CP 2000-Pipe-Mode (interner Aufbau von Pipes für CPtronic/CP 2000-Maschinen); Logfile-Transport (Button für Logfile-Dialog wird im Verbindungsbereich sichtbar); Database-Pfade (Einstellung der entsprechenden Applikations- bzw. Maschinendatenbank).

Die angegebenen Parameter beschreiben die Art und Weise des Kommunikationsaustausches zwischen der ersten und der zweiten Recheneinheit 1, 2 und legen damit z.B. fest, welche erste und zweite Schnittstelle 21, 22 für den Datenaustausch gewählt wird. Das erste Konfigurationsprogramm 13 stellt somit die erste Schnittstelle 21 ein, und das zweite Konfigurationsprogramm 30 stellt die zweite Schnittstelle 22 ein.

Der erste, zweite, dritte und vierte Datenport 12, 31, 27, 28, 29 stellen definierte Schnittstellen dar, über die Daten nach einem festgelegten TCP/IP-Datenprotokoll ausgetauscht werden. Dabei werden an den Datenports die Daten in Form eines Datensatzes mit festgelegtem Aufbau bereitgestellt, wobei in einem Datenkopf eine Portnummer für den Datenport abgelegt ist, von dem die Daten stammen. Folglich sind die Datensätze, die vorzugsweise in Form von Datenpaketen abgegeben werden, eindeutig einem Datenport zuzuordnen. Die von den Datenports parallel abgegebenen Daten werden bei der Ausgabe über das erste oder zweite Serialisationsprogramm 19, 25 in einen seriellen Datenstrom umgewandelt werden. Anschließend wird der serielle Datenstrom von der ersten bzw. zweiten Kanalverwaltung 20, 24 entsprechend der gewählten Konfiguration in einen entsprechenden physikalischen Datenkanal umgewandelt und über die ausgewählte erste oder zweite Schnittstelle 21, 22 zur Wählverbindung 23 weitergegeben.

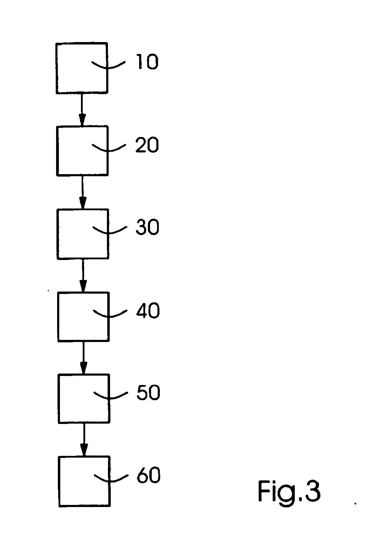

Fig. 3 zeigt ein Verfahren zum Einstellen einer Datenverbindung zwischen der ersten und zweiten Recheneinheit 1, 2. Bei Programmpunkt 10 wird das Programm in der ersten Recheneinheit 1 gestartet. Anschließend wird in der ersten Recheneinheit 1 bei Programmpunkt 20 eine Auswahl eines von mehreren Diagnoseprogrammen vorgenommen. Bei einem folgenden Programmpunkt 30 wird eine Steuereinheit der zu überprüfenden Druckmaschine zugeordnet. Anschließend wird bei Programmpunkt 40 eine Auswahl der Übergabeparameter festgelegt, die bei der Durchführung des Diagnoseprogramms von der zweiten Recheneinheit 2 zur ersten Recheneinheit 1 übertragen werden sollen. Anschließend wird bei Programmpunkt 50 eine Konfiguration der Datenverbindung gewählt, nach der eine Verbindung zwischen der ersten oder zweiten Recheneinheit 1, 2 aufgebaut werden soll. Beim folgenden Programmpunkt 60 werden vorzugsweise Maschinendaten der zu überprüfenden Druckmaschine eingegeben. Nach Abarbeitung der beschriebenen Programmschritte ist eine Initialisierung des der Datenverbindung zwischen der ersten und zweiten Recheneinheit durchgeführt werden.

Beispielsweise wurden durch die Auswahl der Übergabeparameter bei Programmpunkt 40 gleichzeitig die Datenports festgelegt, über die die Daten ausgelesen werden. Zudem wurde über die Festlegung der Konfiguration eine der möglichen Schnittstellen 21, 22 ausgewählt, um die Datenverbindung über die Wählverbindung 23 aufzubauen.

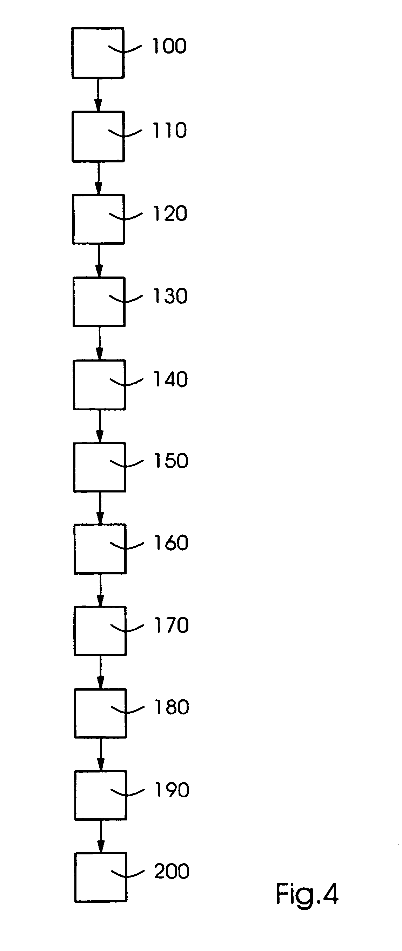

Der Aufbau einer Datenverbindung zwischen der ersten und zweiten Recheneinheit 1, 2 wird im Folgenden anhand der Fig. 4 und der Fig. 2 näher erläutert. Bei Programmpunkt 100 startet die erste Recheneinheit 1 nach einer Login-Eingabe über die Eingabe 4 den Aufbau einer Verbindung zu einer bereits festgelegten zweiten Recheneinheit, die in dem Verfahren nach Fig. 3 ausgewählt wurde. Beim folgenden Programmpunkt 110 sucht die erste Recheneinheit 1 in einer Tabelle die Telefonnummer, über die eine Datenverbindung mit der ausgewählten zweiten Recheneinheit aufgebaut werden kann. Anschließend wählt die erste Recheneinheit 1 bei Programmpunkt 120 die entsprechende Telefonnummer, so dass eine Datenverbindung zwischen der festgelegten ersten Schnittstelle 21 und der festgelegten zweiten Schnittstelle 22 aufgebaut wird. Anschließend sendet die erste Recheneinheit 1 bei Programmpunkt 130 nach einem oben festgelegten Kommunikationsprotokoll eine Anfrage zu einer Datenverbindung zur festgelegten zweiten Schnittstelle 22. Die zweite Schnittstelle 22 übergibt das Anfragesignal über die zweite Kanalverwaltung 24 und das zweite Serialisationsprogramm 25 an die zweite Portsoftware 26, die die Anfrage an einen festgelegten Datenport 27, 28, 29 weitergibt.

Nach Erhalt der Anfrage sendet die zweite Recheneinheit 2 nach dem festgelegten Kommunikationsprotokoll eine Antwort bei Programmpunkt 140 an die erste Recheneinheit 1, in der angegeben wird, über welches Kommunikationsprotokoll Daten weiterhin ausgetauscht werden und welche Diagnoseprogramme zur Überprüfung der Druckmaschine 9 zur Verfügung stehen. Die Diagnoseprogramme sind im zweiten Speicher 7 abgelegt.

Nach Erhalt der Antwort der zweiten Recheneinheit 2 schaltet die erste Recheneinheit 1 bei Programmpunkt 150 auf das von der zweiten Recheneinheit 2 vorgeschlagene Kommunikationsprotokoll um und wählt anschließend bei Programmpunkt 160 mindestens eines der möglichen Diagnoseprogramme und die dazu gehörenden Datenports aus. Diese Information wird an die zweite Recheneinheit 2 übertragen.

Beim folgenden Programmpunkt 170 startet die erste Recheneinheit 1 über ein entsprechendes Startsignal über die Datenverbindung 3 die Abarbeitung eines Diagnoseprogramms in der zweiten Recheneinheit 2. Bei der Abarbeitung des Diagnoseprogramms greift die zweite Recheneinheit 2 auf Daten der Steuereinheit 8 und/oder Daten der Druckmaschine 9 zu. Die Daten der Druckmaschine 9 werden über einen Sensor 32 an die zweite Recheneinheit 2 geliefert, die Informationen über verschiedene Betriebsparameter der Druckmaschine 9 an die zweite Recheneinheit 2 liefert. Dabei werden die Daten in Form von Datenpaketen mit einem Datenkopf und Nutzdaten übertragen. Der Datenkopf enthält Informationen, von welchem Datenport das Datenpaket abgegeben wurde und um welche Art von Daten es sich handelt. Die Art der Daten gibt z.B. an, um welche Parameter der Druckmaschine es sich handelt. Die Zuordnung des Datenpaketes zu einem Datenport erfolgt über eine Portnummer.

Die Datenpakete werden von der zweiten Recheneinheit 2 vorzugsweise getrennt nach Art der Daten über den dritten, vierten oder fünften Datenport 27, 28, 29 ausgegeben.

Beispielsweise werden Servicedaten wie z.B. Daten über einen Dynamiktest der Steuereinheit 8 oder Daten über einen Test des zweiten Speichers 7 auf den dritten Datenport 27 festgelegt und nur über den dritten Datenport 27 ausgegeben. Auftragsrelevante Daten werden beispielsweise über den vierten Datenport 28 ausgegeben. Einstellwerte wie z.B. die Anzahl der Druckwerke, der Auslegertyp usw. werden beispielsweise über den fünften Datenport 29 ausgegeben. Applikationsdaten wie z.B. eine Farbzoneneinstellung oder eine Feuchtmittelmenge werden ebenfalls über einen getrennten Datenport ausgegeben. Mehrere Datenports werden deshalb benötigt, um Daten unterschiedlicher Art gleichzeitig austauschen zu können.

Bei Programmpunkt 190 werden die über den dritten, vierten und fünften Datenport 27, 28, 29 parallel ausgegebenen Daten durch die zweite Portsoftware 26 und das zweite Serialisationsprogramm 25 nach einem vorgegebenen Kommunikationsprotokoll in einen seriellen Datenstrom umgewandelt. Dabei werden die Daten in Form von Datenpaketen nach einem Zeitmultiplexverfahren transportiert, wobei jedes Datenpaket einen Datenheader aufweist, in dem angegeben ist, von welchem Datenport die Daten stammen und welche Länge der Datensatz aufweist.

Bei Programmpunkt 200 wird der serielle Datenstrom von dem ersten Serialisationsprogramm 19 und der ersten Portsoftware 18 aufgrund der Kennzeichnung im Datenheader der Datenpakete in entsprechende parallele Datenströme umgewandelt und den zugeordneten Datenports 12, 31 zugeführt.

Ein wesentlicher Vorteil der Erfindung besteht darin, dass zwischen den Datenports 12, 31 der ersten Recheneinheit 1 und den Datenports 27, 28, 29 der zweiten Recheneinheit 2 ein sogenannter Connection Manager vorgesehen ist, der eine automatische Konfiguration und eine Serialisation der von den Datenports parallel abgegebenen Daten zu einem seriellen Datenstrom ermöglicht. Das Diagnoseprogramm zur Überprüfung der Steuereinheit 8 und der Druckmaschine 9 läuft dabei unabhängig von dem Connection Manager ab und der Druckmaschine 9 läuft dabei unabhängig von dem Connection Manager ab und das Ergebnis wird über die entsprechenden Datenports 27, 28, 29 ausgegeben. Die Datenports in Form von TCP/IP-Datenports stellen eine genormte Schnittstelle dar, so dass eine Programmierung der Diagnoseprogramme und eine Programmierung der Konfigurationsprogramme unabhängig von der zwischen den Datenports verwendeten Datenübertragungsart möglich ist. Somit können die Programme nach festgelegten Verfahren erstellt werden. Die Art der Datenübertragung muss somit dem Programmierer nicht bekannt sein, so dass eine unabhängige Programmierung möglich ist.

Durch die Verwendung einer Portsoftware 18, 26 und eines Serialisationsprogramms 19, 25 wird ein einfacher Datenaustausch ermöglicht. Übertragung der Daten der einzelnen Datenports in Form von Datenpaketen mit einem Datenheader, in dem eine Kennung für den Datenport festgelegt ist, über den die Daten ausgegeben werden, stellt ein einfaches und robustes Verfahren zum Austauschen von Daten über eine Wählverbindung 23 und entsprechend ausgewählte erste und zweite Schnittstellen 21, 22 dar. Die Umwandlung des logischen Datenstromes in einen physikalischen Datenstrom erfolgt über eine Kanalverwaltung 20, 24 und ist somit wiederum unabhängig von der Umwandlung des parallelen Datenstromes in einen seriellen Datenstrom. Somit ist eine relativ einfache und genau zu überprüfende Datenverarbeitung möglich. Treten Fehler auf, so können die einzelnen Datenprogrammabschnitte auf eine korrekte Funktionsweise hin überprüft werden.

### Bezugszeichenliste

- 1: erste Recheneinheit
- 2: zweite Recheneinheit
- 3: Datenverbindung
- 4: Eingabeeinheit
- 5: Anzeigeeinheit
- 6: erster Speicher
- 7: zweiter Speicher
- 8: Steuereinheit
- 9: Druckmaschine
- 10: Datenleitung
- 11: Steuerleitung
- 12: erster Datenport
- 13: Konfigurationsprogramm
- 14: Kundenprogramm
- 15: Applikationsprogramm
- 16: erste Datenbank
- 17: zweite Datenbank
- 18: Portsoftware
- 19: Serialisationsprogramm
- 20: Kanalverwaltung
- 21: Schnittstelle
- 22: zweite Schnittstelle
- 23: Wählverbindung
- 24: zweite Kanalverwaltung
- 25: zweites Serialisationsprogramm
- 26: zweite Portsoftware
- 27: dritter Datenport
- 28: vierter Datenport
- 29: fünfter Datenport
- 30: zweites Konfigurationsprogramm
- 31: zweiter Datenport
- 32: Sensor

## Patentansprüche

1. Verfahren zum Aufbau einer Datenverbindung und Übertragen von Daten von einer ersten Recheneinheit (1) zu einer zweiten Recheneinheit (2), wobei in einer ersten Recheneinheit (1) eine Adresse der zweiten Recheneinheit (2) ausgewählt wird und mit dieser Adresse eine Verbindung zu der zweiten Recheneinheit (2) aufgebaut wird,
in der ersten Recheneinheit (1) in einem Auswahlprogramm die zweite Recheneinheit (2) ausgewählt wird, aus einer Datenbank eine Adresse der zweiten Recheneinheit (2) ausgelesen wird mit der Adresse der zweiten Recheneinheit (2) eine Verbindung aufgebaut wird, **dadurch gekennzeichet, dass** eine Einigung auf eines von mehreren möglichen Kommunikationsprotokollen erfolgt, und dass nach Festlegung des Kommunikationsprotokolls eine Datenverbindung aufgebaut wird, bei der Daten übertragen werden und, **dass** die zweite Recheneinheit (2) mit einer Druckmaschine (9) in Verbindung steht.

2. Verfahren nach Anspruch 1,
**dadurch gekennzeichnet,**
**dass** eine vorgegebene Anzahl von Diagnoseprogrammen vorzugsweise zur Überprüfung einer Druckmaschine angezeigt wird, die mit der zweiten Recheneinheit (2) in Verbindung steht,
**dass** über die erste Recheneinheit (1) ein Diagnoseprogramm ausgewählt und gestartet wird, wobei Ergebnisse des Diagnoseprogramms zur ersten Recheneinheit (1) übertragen werden.

3. Verfahren nach Anspruch 2,
**dadurch gekennzeichnet,**
**dass** eine Tabelle vorgesehen ist, in der vorgegebenen Druckmaschinen Diagnoseprogramme zugeordnet sind,
so dass bei dem Aufbau einer Verbindung die zu einer Druckmaschine gehörenden Diagnoseprogramme zur Auswahl angezeigt werden.

4. Verfahren nach einem der Ansprüche 2 oder 3,
**dadurch gekennzeichnet,**
**dass** in Abhängigkeit vom ausgewählten Diagnoseprogramm ein Kommunikationsprotokoll festgelegt wird, über das Daten zwischen der ersten und der zweiten Recheneinheit (1, 2) übertragen werden.

5. Verfahren nach einem der Ansprüche 2 bis 4,
**dadurch gekennzeichnet,**
**dass** in Abhängigkeit vom ausgewählten Diagnoseprogramm eine vorgegebene Anzahl von Datenports (12, 31, 27, 28, 29) festgelegt wird, über die Daten übertragen werden.

6. Verfahren nach Anspruch 5,
**dadurch gekennzeichnet,**
**dass** vorgegebene Daten nur über vorgegebene Datenports (12, 31, 27, 28, 29) übertragen werden.

7. Verfahren nach Anspruch 6,
**dadurch gekennzeichnet,**
**dass** die Daten, die über die Datenports (12, 31, 27, 28, 29) parallel abgegeben werden, seriell in Datenpaketen über die Datenverbindung übertragen werden.

8. Verfahren nach Anspruch 7,
**dadurch gekennzeichnet,**
**dass** in jedem Datenpaket eine Kennung für den Datenport (12, 31, 27, 28, 29) enthalten ist, die angibt, von welchem Datenport (12, 31, 27, 28, 29) die Daten abgegeben wurden.

9. Verfahren nach einem der Ansprüche 1 bis 8,
**dadurch gekennzeichnet,**
**dass** eine Art der Steuerung ausgewählt wird, mit der die Druckmaschine von der Recheneinheit gesteuert wird, und dass abhängig von der gewählten Steuerung ein Kommunikationsprotokoll und/oder ein Diagnoseprogramm zur Auswahl angezeigt oder ausgewählt wird.

10. Recheneinheit mit einem Speicher,
**dadurch gekennzeichnet,**
**dass** die Recheneinheit alle Verfahrensschnitte eines Verfahrens nach einem der Ansprüche 1 bis 9 abarbeitet.

## Claims

1. Method of establishing a data connection and of transmitting data from a first computing unit (1) to a second computing unit (2),
wherein an address of the second computing unit (2) is selected in a first computing unit (1) and used to establish a connection with the second computing unit (2),
and wherein, in a selection programme of the first computing unit (1), the second computing unit (2) is selected, an address of the second computing unit (2) is read out from a database, and a connection is established using the address of the second computing unit (2),
**characterized in**
**that** one of several possible communications protocols is agreed upon, and that once the communications protocol has been specified, a data connection for transferring data is established, and
**that** the second computing unit (2) is connected to a printing press (9).

2. Method according to Claim 1,
**characterized in**
**that** a predetermined number of diagnostic programmes is displayed, preferably for testing a printing press connected to the second computing unit (2),
**that** a diagnostic programme is selected on the first computing unit (1) and started, the results of the diagnostic programme being transmitted to the first computing unit (1).

3. Method according to Claim 2,
**characterized in**
**that** a table is provided in which diagnostic programmes are assigned to predetermined printing presses so that, when a connection is established, the diagnostic programmes associated with a particular printing press are displayed for selection.

4. Method according to one of Claims 2 or 3,
**characterized in**
**that**, depending on the selected diagnostic programme, a communications protocol is specified for transmitting data between the first and second computing unit (1, 2).

5. Method according to one of Claims 2 to 4,
**characterized in**
**that**, depending on the selected diagnostic programme, a predetermined number of data ports (12, 31, 27, 28, 29) is specified for transmitting data.

6. Method according to Claim 5,
**characterized in**
**that** predetermined data are only transmitted via predetermined data ports (12, 31, 27, 28, 29).

7. Method according to Claim 6,
**characterized in**
**that** the data that are transmitted via the data ports (12, 31, 27, 28, 29) in parallel are serially transmitted in data packets via the data connection.

8. Method according to Claim 7,
**characterized in**
**that** an identification of the data port (12, 31, 27, 28, 29) indicating from which data port (12, 31, 27, 28, 29) data have been sent is included in each data packet.

9. Method according to any one of Claims 1 to 8,
**characterized in**
**that** a control type is selected for controlling the printing press by means of the computing unit and that, depending on the selected control, a communications protocol and/or diagnostic programme is displayed for selection or selected.

10. Computing unit with a memory,
**characterized in**
**that** the computing unit executes all steps of the method according to any one of claims 1 to 9.

## Revendications

1. Procédé pour établir une liaison de données et un transfert de données d'une première unité d'ordinateur (1) à une seconde unité d'ordinateur (2), une adresse de la seconde unité d'ordinateur (2) étant sélectionnée dans une première unité d'ordinateur (1) et une liaison étant établie, avec cette adresse, vers la seconde unité d'ordinateur (2), la seconde unité d'ordinateur (2) étant sélectionnée dans la première unité d'ordinateur (1) dans un programme de sélection, une adresse de la seconde unité d'ordinateur (2) étant lue depuis une banque de données, une liaison étant établie avec l'adresse de la seconde unité d'ordinateur (2), **caractérisé en ce qu'**il se produit un accord sur l'un de plusieurs protocoles de communication possibles et **en ce qu'**après la détermination du protocole de communication, une liaison de données est établie, avec laquelle des données sont transférées, et **en ce que** la seconde unité d'ordinateur (2) est reliée à une imprimante (9).

2. Procédé selon la revendication 1, **caractérisé en ce qu'**un nombre prédéterminé de programmes de diagnostic est fiché, de préférence, pour la vérification d'une imprimante qui est reliée à la seconde unité d'ordinateur (2), **en ce qu'**un programme de diagnostic est sélectionné et démarré au moyen de la première unité d'ordinateur (1), les résultats du programme de diagnostic étant transférés à la première unité d'ordinateur (1).

3. Procédé selon la revendication 2, **caractérisé en ce qu'**il est prévu une table dans laquelle des programmes de diagnostic sont associés à des imprimantes prédéterminées, de sorte que, lorsqu'une liaison est établie, les programmes de diagnostic associés à une imprimante sont affichés pour la sélection.

4. Procédé selon l'une quelconque des revendications 2 ou 3, **caractérisé en ce qu'**un protocole de communication est déterminé en fonction du programme de diagnostic sélectionné, au moyen duquel protocole de communication des données sont transférées entre la première et la seconde unité d'ordinateur (1, 2).

5. Procédé selon l'une quelconque des revendications 2 à 4, **caractérisé en ce qu'**un nombre prédéterminé de ports de données (12, 31, 27, 28, 29) est déterminé en fonction du programme de diagnostic sélectionné, au moyen desquels des données sont transférées.

6. Procédé selon la revendication 5, **caractérisé en ce que** des données prédéterminées sont transférées uniquement par des ports de données prédéterminés (12, 31, 27, 28, 29).

7. Procédé selon la revendication 6, **caractérisé en ce que** les données qui sont émises en parallèle par les ports de données (12, 31, 27, 28, 29) sont transférées en série dans des paquets de données par l'intermédiaire de la liaison de données.

8. Procédé selon la revendication 7, **caractérisé en ce que** chaque paquet de données contient une identification pour le port de données (12, 31, 27, 28, 29) qui indique à partir de quel port de données (12, 31, 27, 28, 29) les données ont été émises.

9. Procédé selon l'une quelconque des revendications 1 à 8, **caractérisé en ce que** l'on sélectionne un type de commande avec lequel l'imprimante est commandée par l'unité d'ordinateur et **en ce que**, en fonction de la commande sélectionnée, un protocole de communication et/ou un programme de diagnostic est affiché pour la sélection ou sélectionné.

10. Unité d'ordinateur avec une mémoire, **caractérisée en ce que** l'unité d'ordinateur exécute toutes les étapes de procédé d'un procédé selon l'une quelconque des revendications 1 à 9.
